# EUROPÄISCHE PATENTSCHRIFT

(11) **EP 0 986 438 B1**
(45) Veröffentlichungstag und Bekanntmachung des Hinweises auf die Patenterteilung: **19.12.2001**
(21) Anmeldenummer: 98920438.3
(22) Anmeldetag: 26.05.1998
(51) Int. Cl.: B05D 1/18

(54) **VERFAHREN ZUM BESCHICHTEN EINER OBERFLÄCHE**
METHOD FOR COATING A SURFACE
PROCEDE D'ENDUCTION D'UNE SURFACE

(30) Priorität: 28.05.1997 CH 126297
(43) Veröffentlichungstag der Anmeldung: 22.03.2000
(73) Patentinhaber: Global Surface Aktiengesellschaft, 8002 Zürich (CH)
(72) Erfinder: HIRAYAMA, Martina, K., N., CH-8002 Zürich (CH); CASERI, Walter, R., CH-8049 Zürich (CH); SUTER, Ulrich, W., CH-8303 Bassersdorf (CH)
(74) Vertreter: Sieckmann, Ralf, Dr.
(86) Internationale Anmeldenummer: CH9800220
(87) Internationale Veröffentlichungsnummer: WO9853921

(56) Entgegenhaltungen:
- DE-A- 1 914 411
- US-A- 4 873 119
- US-A- 5 215 801
- PATENT ABSTRACTS OF JAPAN vol. 018, no. 656 (C-1286), 13. Dezember 1994 & JP 06 256659 A (SHIN ETSU CHEM CO LTD), 13. September 1994
- CASERI, WALTER ET AL: "Hydrosilylation chemistry and catalysis with cis-PtCl2(PhCH:CH2)2" ORGANOMETALLICS (1988), 7(6), 1373-80 CODEN: ORGND7;ISSN: 0276-7333, 1988, XP002035407

## Beschreibung

Die vorliegende Erfindung betrifft ein Verfahren zum Beschichten einer Metalloberfläche, Metalloxidoberfläche, Metallsalzoberfläche, siliziumhaltigen Oberfläche und hochmolekularen aquoxidhaltigen organischen Oberfläche sowie den erhaltenen beschichteten Formkörper.

Es sind verschiedene Verfahren zum Beschichten von Oberflächen bekannt, wie beispielsweise CVD (Chemical Vapor Deposition), PVD (Physical Vapor Deposition), Plasmabeschichtung, Langmuir-Bodgett-Technik und Adsorption oder Reaktion aus einer Lösung. Bei allen diesen Techniken werden dünne bzw. ultradünne Filme (inkl. Monoschichten) erhalten.

Bei dünnen und ultradünnen Filmen handelt es sich um Filme mit einer durchschnittlichen Dicke bis zu einigen Mikrometern. Gut untersucht sind beispielsweise selbst-assemblierende Filme, d.h. Filme, welche sich aus homogener Lösung spontan an Oberflächen anlagern. Diphosphate bilden beispielsweise selbst-assemblierende Multischichten (Ulman,A.; Chem.Rev. **1996**,96, 1533 und Ulman,A.; MRS Bulletin **1995**,6,46). Selbst-assemblierende Monoschichten werden auch von Organoschwefelverbindungen gebildet, welche meistens entweder eine Thiol-, Disulfid- oder Thioethergruppe enthalten (loc.cit.). Diese Organoschwefelverbindungen haben eine starke Affinität zu Übergangsmetall-Oberflächen. Die Koordination auf Gold-, Silber-, Kupfer-, Platin-, Quecksilber-, Eisen-, Galliumarsenid- und Goldkolloidoberflächen ist bereits untersucht (loc.cit.). Organoselenverbindungen, wie z.B. Organoselenol auf Gold (Sarnant,M.G.; Brown,C.A.; Gordon II,J.G.; Langmuir **1992**,8,1615), und Fettsäuren, wie z.B. n-Alkanfettsäuren auf Al₂O₃, AgO, CuO und Glas (Ulman,A.; Chem.Rev. **1996**,96,1533 und Ulman,A.; MRS Bulletin **1995**,6,46) bilden ebenfalls selbst-assemblierende Monoschichten. Die Adsorption von Alkannitrilen (Steiner,U.B.; Caseri,W.R.; Suter,U.W.; Langmuir **1992**,8,2771), Phosphinen, Triphenylamin, Triphenylarsin, Triphenylstibin, Triphenylbismutin (Steiner,U.B.; Neuenschwander,P.; Caseri,W.R.; Suter,U.W.; Stucki,F.; Langmuir **1992**,8,90), Imiden (Steiner,U.B.; Caseri,W.R.; Suter,U.W.; Rehahn,M.; Schmitz,L.; Langmuir **1993**,9,3245) und Tricosylisocyanid (Bain,C.D.; Eval,J.; Whitesides,G.M.; J.Am.Chem.Soc. **1989**,111,7155) wird ebenfalls beschrieben. Monoschichten mit kovalenten C-Si Bindungen werden auf H-Si(111) oder H-Si(100) Siliziumoberflächen durch den Einsatz von Peroxiden erhalten (Ulman,A.; Chem.Rev. **1996**,96,1533). Organosiliziumverbindungen, welche meistens entweder eine Chlorosilan-, Alkoxysilan- oder Aminosilangruppe enthalten, bilden ebenfalls selbst-assemblierende Monoschichten auf Substraten wie Siliziumoxid, Aluminiumoxid, Quarz, Glas, Glimmer, Zinkselenid, Germaniumoxid und Gold (Ulman,A.; Chem.Rev. **1996**,96,1533 und Ulman,A.; MRS Bulletin **1995**,6,46). Auch Multischichten dieser Organosiliziumverbindungen sind bekannt (Ulman,A.; Chem.Rev. **1996**,96,1533 und Ulman,A.; MRS Bulletin **1995**,6,46).

In der DE-A 19 14 411 wird eine Gasphasenreaktion bzw. ein Gasphasenaufwachsen beschrieben. Verbindungen mit beispielsweise Si-H werden verdampft, d.h. in die Gasphase gebracht. Die reaktiven gasförmigen Substanzen werden mit Katalysatoren (beispielsweise Pt) aktiviert. Anschliessend müssen die aktivierten Substanzen entweder mit einem Reagenz (beispielsweise Ammoniak) reagieren oder sich zersetzen. Erst die reagierte oder zersetzte Substanz bildet die gewünschte Schicht.

In der US-A 4,873,119 wird ebenfalls eine Gasphasenreaktion beschrieben. Dabei werden amorphe Halbleiter produziert, ausgehend von Si-H- oder Ge-H-Verbindungen. Die Si-H- oder Ge-H-Verbindungen werden in die Gasphase gebracht, mit beispielsweise Platin aktiviert und durch Glimmentladung, Hitze (inkl. Pyrolyse) oder Licht (inkl. IR, UV) zu amorphen Halbleitern zersetzt und auf einer Oberfläche abgeschieden.

Der US-A 5,215,801 liegt die Aufgabe zugrunde, ein Verfahren zur Einbettung eines elektronischen Gerätes zu schaffen, bei dem eine Mischung aus einem ungehärteten (uncured) Silikonharz, welches Vinylgruppen, also Zweifachbindungen des Typs -CH=CH2 enthält mit einem Füllstoff SiO₂ als Hauptkomponente und einem Silan in Xylol in Gegenwart eines Pt-Katalysator angemischt, diese Mischung auf eine elektronische Schaltung aufgebracht und Schaltung einschließlich Mischung bis zur Vernetzung = Vulkanisation erhitzt werden. Wesentlich ist hierbei, wie sich auch aus Fig. 1 ergibt, daß die Schaltung nach der Einbettung im vernetzten Harz sehr gut gegen Feuchtigkeit und erhöhte Temperatur geschützt ist. Eine derartiges Einbetten schafft um etwa 4 bis 5 Zehnerpotenzen dickere Schichten im Bereich von etwa 75 bis 150⁻⁶ m, also keine dünnen Schichten im Nanometerbereich, wie sie erfindungsgemäß erzielt werden. Diese dünneren Schichtdicken werden für das Einbetten ausdrücklich als unerwünscht bezeichnet, nämlich bereits geringfügig dünnere Schichten von 10 bis 25 10⁻⁶ m. Die US-A 5,215,801 setzt weiter zwingend vinylgruppen- oder mehrfachbindungenenthaltende d.h. unvernetzte Silikonharze (=Silikonkautschuk) voraus, die erfindungsgemäß nicht eingesetzt werden und die zwingend "erst durch eine Vernetzung von 1 Stunde bei 100 °C und dann 3 Stunden bei 175 °C zum vernetzten Silikonharz, dem Silikongummi umgesetzt werden" . Wir verweisen in diesem Zusammenhang auf Römpp, 9. Aufl., 1992, Seite 4168 ff, Stichwort Silicone, die Abb. auf S. 4170, links unten, den die Seiten 4170 und 4171 verbindenden Absatz und den ersten vollständigen Absatz auf Seite 4171. Dort wird auch auf den andersartigen Einsatz des Silikongummis als Vergußmasse hingewiesen, das zwangsläufig keine Klebeigenschaften gegenüber glatten Oberflächen aufweisen kann. Ein zusätzlicher Schritt im Sinne einer über Stunden andauernden Temperung ist erfindungsgemäß nicht erforderlich. Auch offenbar gasförmige Ausgangsstoffe auf Basis von Silankomponenten, die in allen Ausführungsbeispielen der US-A 5,215,801 in 4 bis etwa 14 Gew-% Anwendung finden, sind in der vorliegenden Erfindung klar ausgeschlossen.

Aufgabe der vorliegenden Erfindung ist es, ein Verfahren zum Beschichten von Oberflächen sowie den entsprechenden Formkörper bereitzustellen, das die Herstellung von gut haftenden dünnen und/oder ultradünnen Schichten (inkl. Monoschichten) auf so unterschiedlichen Materialien wie Metallen, Metalloxiden, Metallsalzen, siliziumhaltigen Materialien und hochmolekularen aquoxidhaltigen organischen Materialien erlaubt.

Diese Aufgabe wird durch die Merkmale der beiden unabhängigen Ansprüche 1 und 10 gelöst. Bevorzugte Ausführungsformen der Erfindung bilden den Gegenstand der Ansprüche 2 bis 10.

Die vorliegende Erfindung betrifft somit ein Verfahren zum Beschichten einer Metafloberfläche, Metalloxidoberfläche, Metallsalzoberfläche, siliziumhaltigen Oberfläche und hochmolekularen aquoxidhaltigen organischen Oberfläche, wobei man ein Reagenz, das eine reaktive Gruppe, ausgewählt aus Si-H, Sn-H und Ge-H, aufweist, in Gegenwart eines Platinmetalles in Form einer Verbindung oder in metallischer Form als Aktivator, in flüssiger, pastoser oder fester Form, auf die zu beschichtende Oberfläche aufbringt, wobei eine Mischung aus 16 bis 23 Gew.-% ungehärtetem Silikonharz, 46 bis 73 Gew.-% SiO₂, 4 bis 15 Gew.-% Silan und 6 bis 25 Gew.-% Xylol, die einen Platinkatalysator enthält, ausgeschlossen ist.

Bevorzugt beschichtet man erfindungsgemäß eine siliziumoxidhaltige Oberfläche, die Oberfläche eines Silizumwafers, die Oberfläche eines anorganischen Glases, eine Keramikoberfläche, eine Gesteinoberfläche, die Oberfläche eines künstlichen Steins, die Oberfläche eines Polysaccharids, die Oberfläche einer Cellulose oder eines Cellulosederivats, eine Holzoberfläche, die Oberfläche eines Proteins und/oder eine Oberfläche, die eine natürliche Oxidschicht aufweist.

Weiter bevorzugt verwendet man erfindungsgemäß als Aktivator eine Verbindung von Platin, Platin in metallischer Form als Teilchen atomarer, kolloidaler oder grösserer Dimension, eine Platinverbindung, welche mit Silanen zu Platin(0) reduziert wird oder welche bereits Platin(0) enthält, cis-Dichlorobis(styrol)platin(II) und/oder Platin(0)divinyltetramethyldisiloxan.

Weiterhin bevorzugt verwendet man erfindungsgemäß als Reagenz eine niedermolekulare Verbindung und/oder eine hochmolekulare Verbindung.

Weiterhin bevorzugt verwendet man erfindungsgemäß als Reagenz, welches als reaktive Gruppe eine Si-H-Gruppe aufweist, ein Silan, Polysilazan, ein Polyhydrosiloxan und/oder ein Polysiloxan.

Weiterhin bevorzugt verwendet man erfindungsgemäß als Reagenz ein Copolymer.

Weiterhin bevorzugt verwendet man erfindungsgemäß ein Reagenz mit weiteren reaktiven Gruppen, wobei die weitere(n) reaktive(n) Gruppe(n) für eine Reaktion nach dem Beschichten der Oberfläche bestimmt sind.

Weiterhin bevorzugt zersetzt man erfindungsgemäß die Beschichtung auf der Oberfläche.

Schließlich bevorzugt stellt man erfindungsgemäß eine Haft-, Klebe-, Haftvermittlungs-, Schmier-, Gleit-, Schutz-, Biokompatibilitäts-, Antihaft- und/oder Antigraffitischicht und/oder eine Beschichtung für Druckplatten oder -folien her.

Die Erfindung betrifft weiterhin einen Formkörper mit einer Metalloberfläche, Metalloxidoberfläche, Metailsalzoberfläche, siliziumhaltigen Oberfläche und/oder hochmolekularen aquoxidhaltigen organischen Oberfläche, der nach dem Verfahren gemäss einem der vorangehenden Modifikationen beschichtet worden ist.

Die Erfindung beruht auf der Erkenntnis, dass Reagenzien mit Si-H-, Sn-H-oder Ge-H-Gruppen in Gegenwart eines Platinmetalles in Form einer Verbindung oder in metallischer Form als Aktivator Schichten auf metallischen Oberflächen, metalloxidischen Oberflächen, metallsalzigen Oberflächen, siliziumhaltigen Oberflächen und hochmolekularen aquoxidhaltigen organischen Oberflächen bilden. Die Reagenzien sind Feststoffe oder Flüssigkeiten, die als solche oder in einem Medium in flüssiger, pastoser oder fester Form appliziert werden. Die Reagenzien können beispielsweise in Lösung, in Emulsion, in Suspension, in Schaum oder in Spray appliziert werden. Unter den Platinmetallen werden gemäss fachsprachlichem Gebrauch die Elemente Ru, Rh, Pd, Os, Ir und Pt verstanden. Bevorzugt werden Platinverbindungen, darunter solche, welche mit Silanen zu Platin(0) reduziert werden oder solche, die bereits Platin(0) enthalten. In metallischer Form liegen die Platinmetalle vorzugsweise als Teilchen atomarer, kolloidaler oder grösserer Dimension vor.

Platinverbindungen, die durch Silane zu Pt(0) reduziert werden können oder solche, die sich bereits in der Oxidationsstufe 0 befinden, sind beispielsweise aus Caseri, W.R.; Dissertation, ETH Zürich, **1988**, bekannt. Beispiele für solche Platinverbindungen sind cis-Dichlorobis(styrol)platin(II), trans-Dichlorobis(styrol)platin(II), Platin(II)-chlorid, Platin(II)-bromid, Kaliumterachloroplatinat(II), Platin(0)-divinyltetramethyldisiloxan, Zeise-Salz, Triphenylphosphinacetylacetonatochloroplatin(II), Dichloro-µ₂-dichlorobis-(styrol)diplatin(II) oder Bis(cyclooctadien)platin(O).

Aus der Organometallchemie kennt man Übergangsmetallverbindungen, die beispielsweise Si-H-, Sn-H- oder Ge-H-Bindungen oxidativ addieren. Diese Eigenschaft wird beispielsweise für die Hydrosilylierungs-, Hydrostannylierungs- und Hydrogermylierungsreaktion ausgenutzt. Die Hydrosilylierungsreaktion beschreibt die Additionsreaktion von organischen und anorganischen Siliziumhydriden an Mehrfachbindungen wie beispielsweise Olefine, Acetylene, Ketone, Imine und Nitrile (Bogdan,M.; "Comprehensive Handbook on Hydrosilylation", Pergamon Press, Oxford **1992**). Auf der Grundlage von Speier's Ergebnissen (Speier,J.L.; Webster,J.A.; Barnes,G.H.; J.Am.Chem.Soc. **1957**,79,974; Speier,J.L.; Adv.Organomet.Chem. **1979**,17,407) und ihren eigenen Beobachtungen der ersten Beispiele für die oxidative Addition von Silanen an Übergangsmetallverbindungen, schlugen Chalk und Harrod einen homogenkatalysierten Reaktionsmechanismus für die Hydrosilylierung vor (Chalk,A.J.; Harrod,J.F.; J.Am.Chem.Soc. **1965**,87,16). Es gibt aber auch heterogenkatalysierte Hydrosilylierungsreaktionen, bei denen die Übergangsmetallverbindung zum Kolloid reduziert wird und das entstehende Kolloid katalytisch aktiv ist. Beispielsweise wird Platin(IV)-chlorwasserstoffsäure zu Platin-Kolloiden reduziert, welche dann katalytisch aktiv sind (Lewis,L.N.; Lewis,N.; J.Am.Chem.Soc. **1986**,108,7228). Die Hydrostannylierungs- und Hydrogermylierungsreaktionen beschreiben analog die Additionsreaktionen ihrer organischen und anorganischen Hydride an Mehrfachbindungen.

*Die obigen Literaturstellen wie auch die JP 06 256 659 beschreiben Reaktionen an Mehrfachbindungen. Die Reaktion gemäss JP 06 256 659 führt dabei zur Vemetzung bzw. Vulkanisation der Polysiloxane zu Silikonkautschuken oder Silikonharzen. Dadurch entstehen unlösliche und von der Unterlage abziehbare Überzüge.*

Gemäss der Erfindung wurde überraschenderweise gefunden, dass eine Reaktion zwischen der festen Phase des Materials der zu beschichtenden Oberfläche und dem Reagenz stattfindet, wobei die gewünschte festhaftende Beschichtung in Gegenwart des Aktivators erzielt wird.

Die vorliegende Erfindung hat gegenüber Beschichtungsverfahren wie CVD und PVD den Vorteil, dass Reagenzien nicht in die Gasphase gebracht werden müssen, sondern in flüssiger, pastoser oder fester Form appliziert werden.

Ein besonderer Vorteil des erfindungsgemässen Verfahrens ist es, dass eine Vielfalt von Substraten beschichtet werden kann. Als zu beschichtende Oberflächen, d.h. Substrate, kommen Metalle, Metalloxide, Metallsalze, Legierungen, beispielsweise Stähle, Siliziumverbindungen (beispielsweise Siliziumwafer oder Silicatgläser), Keramiken (beispielsweise Silicatkeramiken, Oxidkeramiken, Ziegel, Tone, Glaskeramiken, Cermets), Gesteine (beispielsweise Silicate, Quarze, Carbonate, Nitrate, Borate, Phosphate, Sulfate) und/oder künstliche Steine, beispielsweise Beton, in Frage. Beispiele für Metalle, Metalloxide und Metallsalze sind Li, Na, Mg, Al, K, Ca, Ti, V, Cr, Mn, Fe, Co, Ni, Cu, Zn, Ge, Rb, Y, Zr, Nb, Mo, Ru, Rh, Pd, Ag, Cd, In, Sn, Cs, Ba, Hf, Ta, W, Re, Os, Ir, Pt, Au, Pb, La, Ce, Nd und U. Als zu beschichtende Oberflächen kommen auch hochmolekulare aquoxidhaltige organische Verbindungen, beispielsweise Holz, Karton, Papier, Polysaccharide (beispielsweise Cellulose oder Cellulosederivate), Proteine (beipielsweise Seide, Woile oder Kollagen) und oder Polyalkohole in Frage. Substrate mit hochmolekularen aquoxidhaltigen organischen Verbindungen können beispielsweise auch durch Oberflächenbehandlungen erhalten werden. Beispiele sind Polyethylen oder Polypropylen, das durch Corona-, Plasma-, Flammen- oder Chromschwefelsäurebehandlung modifiziert worden ist, oder Polyethylenterephthalat oder Polyamid, das durch hydrolytische Spaltung vorbehandelt worden ist. In Frage kommmende Substrate können auch in gemischter Form auftreten, beispielsweise können an der Oberfläche von Gesteinen verschiedene Siliziumoxide, Metalloxide und Metallsalze gleichzeitig enthalten sein. Ein weiterer Vorteil des erfindungsgemässen Verfahrens ist es, dass es oft das Aufbringen einer Nutzschicht auf natürlich gebildeten Oxidschichten erlaubt. Es können sowohl planare als auch nichtplanare Oberflächen beschichtet werden. Die Grösse und/oder Beschaffenheit der zu beschichtenden Oberfläche beschränkt das erfindungsgemässe Verfahren nicht. Deshalb können Folien, äussere und innere Oberflächen an porösen Materialien und Schichten (d.h. auch die Wände von Poren), Innen-und Aussenflächen, Partikel, Kolloide, und entsprechend vorbeschichtete Oberflächen von beispielsweise Kunststoffen, Gläsern etc. erfindungsgemäss beschichtet werden.

Die Definition von Oxiden basiert auf Falbe, J.; Regitz, M.; "Römpp Chemie Lexikon", 9. Aufl., Stuttgart **1991**, **S. 3170**. Oxide sind Verbindungen eines Elements mit Sauerstoff, sofern darin der Sauerstoff der elektronegative Bestandteil ist. Die Anzahl der im Molekül vorhandenen Sauerstoffatome, kann im Verhältnis zu den Elementatomen variieren. Oxide können ebenfalls von mehreren verschiedenen Elementen (z.B. Oxometallate, Spinelle) und/oder von einem Element mit unterschiedlichen Oxidationszahlen (z.B. Mennige) gebildet werden. Besondere Formen von Oxiden sind die Hyperoxide, Peroxide, Suboxide und Anhydride wie auch die Iso- und Heteropolysäuren. Zu den oxidischen Verbindungen muss man auch die Aquoxide (Hydroxide, Oxidhydrate, Oxonium-Salze und Oxidaquate) rechnen. Neben den stöchiometrisch zusammengesetzten Oxiden gibt es auch nichtstöchiometrische Verbindungen mit Sauerstoff, in denen Cluster-Bindungen vorliegen können.

Hochmolekulare aquoxidhaltige organische Verbindungen (Molekulargewichte über etwa 1'000 g/mol) enthalten Hydroxid-Gruppen, deprotonierte Hydroxid-Gruppen und/oder Wasser (Hydroxide, Oxidhydrate, Oxonium-Salze und Oxidaquate). Dabei kann das Wasser als H₂O-Molekül und/oder in Form von H₃O⁺-Gruppen stöchiometrisch oder unstöchiometrisch an die organische Verbindung gebunden undloder frei beweglich auf dieser adsorbiert sein.

Das erfindungsgemässe Verfahren erlaubt eine grosse Variation der erstellten Beschichtungen. Erfindungsgemäss können sowohl niedermolekulare Verbindungen, d.h. solche mit Molekulargewichten von bis zu etwa 1'000 g/mol, als auch hochmolekulare Verbindungen, d.h. solche mit Molekulargewichten über etwa 1'000 g/mol, eingesetzt werden. Durch den Einsatz von niedermolekularen Verbindungen, Polymeren oder Copolymeren, welche weitere funktionelle Gruppen enthalten können, können Beschichtungen für verschiedene Zwecke hergestellt werden.

Als Reagenzien mit Si-H-Gruppen kommen z.B. auch Si-H-Gruppen enthaltende Polysilane, Polycarbosilane oder Polysilsesquioxane in Frage. Durch den Einsatz von Reagenzien mit weiteren reaktiven Gruppen können auf den erfindungsgemässen Beschichtungen weitere Reaktionen zur Modifizierung der Oberfläche durchgeführt werden.

Die erfindungsgemässen Beschichtungen können für verschiedene Zwecke zersetzt werden. Beispielsweise können durch thermische Zersetzung der erfindungsgemässen Beschichtungen Oxidschichten erzeugt werden. Ausserdem kann das erfindungsgemässe Verfahren zusammen mit anderen Oberflächenbehandlungen kombiniert werden, um verschiedene Zersetzungsprodukte zu erhalten.

Die erfindungsgemässen Beschichtungen können, je nach Wahl des Reagenzes, mit verschiedenen Eigenschaften hergestellt werden. Entsprechend können sie in den verschiedensten Bereichen der Technik Verwendung finden. Die Beschichtungen können beispielsweise als Schutz- (UV, Korrosion, Diffusion, Mikroorganismen, etc.), imprägnier-, Deck-, Farb-, Lack-, Zier-, Haftvermittler-, Biokompatibilitäts-, Haft-, Klebe-, Schmier-, Gleit-, Antiblock-, Antihaft-, Antigraffiti-, Antibeschlag-, Trenn- und/oder Entformungsschicht angewendet werden. Ausserdem kann das erfindungsgemässe Verfahren zusammen mit anderen Oberflächenbehandlungen kombiniert werden, um die oben genannten Arten von Schichten zu erzielen.

Die erfindungsgemässen Beschichtungen eignen sich, wie oben erwähnt, z.B. für die Verbindung von Oberflächen. Z.B. können mit Hilfe der erfindungsgemässen Beschichtungen Oberflächen mit Reagenzien mit weiteren funktionellen Gruppen beschichtet werden. Durch die Reaktion solcher weiterer funktioneiler Gruppen mit anderen Substanzen können Oberflächen z.B. miteinander verbunden werden.

Die erfindungsgemässen Beschichtungen eignen sich z.B. für die thermische Verbindung mit Kunststoffen. Z.B. können die erfindungsgemässen Beschichtungen direkt mit Kunststoffen hinterspritzt werden. Ausserdem kann das erfindungsgemässe Verfahren zusammen mit anderen Oberflächenbehandlungen kombiniert werden, um die oben genannten Arten von Wirkungen zu erzielen.

Die erfindungsgemässen Beschichtungen eignen sich, wie erwähnt, z.B. für die Schmierung. Die erfindungsgemässen Beschichtungen können z.B. direkt als Schmierschicht und/oder als Schicht zur Herabsetzung der Entmischung zwischen Oberfläche und Schmiermittel verwendet werden. Ausserdem kann das erfindungsgemässe Verfahren zusammen mit anderen Behandlungen kombiniert werden, um die oben genannten Arten von Wirkungen zu erzielen. Z.B. können, wie oben erwähnt, mit Hilfe der erfindungsgemässen Beschichtungen mechanische Systeme wie Uhrwerke geschmiert werden.

Die erfindungsgemässen Beschichtungen können als Stabilisator, Bindemittel, Festiger, Verstärker, Verdicker und/oder Weichmacher eingesetzt werden. Ausserdem kann das erfindungsgemässe Verfahren zusammen mit anderen Behandlungen kombiniert werden, um die oben genannten Arten von Wirkungen zu erzielen.

Die erfindungsgemässen Beschichtungen können für die Herstellung von Oberflächen unterschiedlicher Grenzflächenenergie genutzt werden. Durch den Einsatz entsprechender Reagenzien können z.B. unterschiedlich benetzbare hydrophile oder hydrophobe Beschichtungen mit unterschiedlichen Kontaktwinkeln hergestellt werden. Ausserdem kann das erfindungsgemässe Verfahren zusammen mit anderen Behandlungen kombiniert werden, um die oben genannten Arten von Wirkungen zu erzielen.

Die erfindungsgemässen Beschichtungen können z.B., wie oben erwähnt, zur Herstellung unterschiedlich benetzbarer Beschichtungen auf Druckplatten oder -folien aufgebracht werden. Die Beschichtungen können anschliessend partiell entfernt oder verändert werden. Diese Methode eignet sich insbesondere zur Herstellung von Beschriftungen. Eine Beschriftung kann aber auch direkt durch das Aufbringen der Beschichtung z.B. in der Druckerei vorgenommen werden. Bei der Verwendung von farbabstossenden Beschichtungsmaterialien wie z.B. Polysiloxanen ist damit z.B. ein wasserloser Flachdruck möglich. Bei der Verwendung von farbführenden wasserabstossenden Beschichtungsmaterialien ist damit z.B. ein Naß-Offsetdruck möglich. Es können such Reagenzien zur Beschichtung verwendet werden, welche z.B. durch Licht und /oder Temperatur ihre Eigenschaften reversibel von hydrophil zu hydrophob und/oder umgekehrt verändern (Beschriftung). Ausserdem kann das erfindungsgemässe Verfahren zusammen mit anderen Behandlungen kombiniert warden, um die oben genannten Arten von Wirkungen zu erzielen.

Die erfindungsgemässen Beschichtungen eignen sich unter anderem für verschiedene Bereiche der Elektrotechnik, Elektronik, Mikrotechnik, Nanotechnik, Biotechnik und/oder Medizin, z.B. für Isolatoren, für Sensoren; für Detektoren und/oder für das "Micro-Contact-Printing". Die erfindungsgemässen Beschichtungen können auch im Bereich der Umwelttechnik z.B. für Filter Anwendung finden. Die erfindungsgemässen Beschichtungen können z.B. auch in den Bereichen Bauten-, Denkmal- und/oder Kunstschutz und/oder -sanierung verwendet werden. Die erfindungsgemässen Beschichtungen eignen sich auch für verschiedene Bereiche der Automobilindustrie, z.B. für die Oberflächenmodifizierung für Lacke. Ausserdem kann das erfindungsgemässe Verfahren zusammen mit anderen Behandlungen kombiniert werden, um in den oben genannten Bereichen eingesetzt zu werden.

Bei der Durchführung des erfindungsgemässen Verfahrens kann der Aktivator z.B. in Substanz, in Lösung, in Emulsion, in Suspension, in Schaum, in Spray oder in anderen Systemen, welche flüssige und/oder feste Phasen enthalten, eingesetzt werden. Bevorzugt wird zuerst der Aktivator und dann das Reagenz auf eine zu beschichtende Substratoberfläche aufgebracht oder Aktivator und Reagenz werden zuerst miteinander vermischt, und die erhaltene Mischung wird auf die Substratoberfläche aufgebracht. Aktivator und/oder Reagenz können auch mit anderen Substanzen gemischt werden und dann auf die zu beschichtende Substratoberfläche aufgebracht werden.

Die nachfolgenden Beispiele veranschaulichen einzelne Aspekte der Erfinung. Ein Teil der Beispiele wurde unter Argonatmosphäre ausgeführt. Dadurch soll der Einfluss von Luftverunreinigungen auf die erfindungsgemässe Beschichtungsreaktion ausgeschlossen werden. Das erfindungsgemässe Verfahren lässt sich aber auch problemlos ohne Edelgasatmosphäre, d.h. an der Luft, durchführen.

### Beispiele

### Herstellung von mit einer Nutzschicht zu versehenden Oberflächen

Auf einseitig polierte Si(100)Einkristallscheiben (Philips Semiconductor AG, Zürich, Schweiz) (18x40x0.38 mm) wurden Aluminium-, Titan-, Chrom-, Eisen, Nickel-, Kupfer- oder Goldfilme aufgebracht. Die Scheiben wurden durch Einstellen in Toluol UV von organischen Verunreinigungen gesäubert. Die Filme wurden auf den Scheiben mittels thermischer Bedampfung bei einem Druck von etwa 10⁻³ Pa in einer Balzers MED 010 Kleinbedampfungsanlage (Balzers AG, Balzers, Liechtenstein) erzeugt. Dabei wurde zuerst eine Schicht von ca. 6 nm Chrom (99,9%, Balzers AG, Balzers, Liechtenstein) als Haftvermittler und darauf mit Bedampfungsraten von ca. 2 nm/s entweder etwa 200 nm Aluminium (99,89%, Balzers AG, Balzers, Liechtenstein), Eisen (99,9%, Aldrich, Buchs, Schweiz), Kupfer (99,9%, Balzers AG, Balzers, Liechtenstein), Gold (99,99%, Balzers AG, Balzers, Liechtenstein) oder etwa 40 nm Nickel (99,9%, Aldrich, Buchs, Schweiz) aufgedampft. Etwa 200 nm Titan (99,99%, Aldrich, Buchs, Schweiz) oder Chrom (99,9%, Balzers AG, Balzers, Liechtenstein) wurden mit Bedampfungsraten von ca. 2 nm/s direkt auf die Si(100)-Einkristallscheiben aufgedampft. Nach dem Aufdampfprozess wurde die Vakuumkammer mit Argon gefüllt. Die Platten wurden der Kammer entnommen und direkt weiterverarbeitet. Die durch Aufdampfen gebildeten Filme, Aluminium-, Titan-, Chrom-, Eisen-, Nickel- und Kupferoberflächen, wurden mit ihrer unter den gewählten Bedingungen entstehenden natürlichen Oxidschichten verwendet. Bei Goldfilmen konnte unter den gewählten Bedingungen keine Oxidation nachgewiesen werden.

Als eine Stahloberfläche wurde die Oberfläche von warmgewalzten Blechen aus unlegiertem Baustahl (USt 37-2, roh, Pestalozzi, Dietikon, Schweiz) (18x40x1 mm) verwendet. Die Bleche wurden durch Einstellen in Toluol UV von organischen Verunreinigungen gesäubert.

Als eine Eisenplatte wurde die Oberfläche von S 235 JRG2 (Surber Metallbau, Zürich, Schweiz) (18x40x1 mm) verwendet. Die Platten wurden mit Toluol p.a. abgerieben. Anschliessend wurden die Platten während einer Stunde in Essigsäure ins Ultraschallbad (Bandelin, Sonorex, Super RK 106) gestellt. Die Platten wurden dann mit Wasser (dest.), Aceton und Toluol p.a. gespült.

Als eine V2A-Stahlplatte wurde die Oberfläche von W 4301 BT (Notz Metall, Biel, Schweiz) (18x40x1 mm) verwendet. Die Platten wurden mit Toluol p.a. abgerieben. Anschliessend wurden die Platten während einer Minute in Königswasser eingestellt. Die Platten wurden dann mit Wasser (dest.), Aceton und Toluol p.a. gespült.

Als eine Kupferplatte wurde die Oberfläche von Cu-ETP/CuOF (DIN 1787) (Metall Service Menziken, Dübendorf, Schweiz) verwendet. Als eine Aluminiumplatte wurde die Oberfläche von AlSi1MgMn (Alusuisse Allega, Niederglatt, Schweiz) verwendet. Die Platten (18x40x1 mm) wurden mit Toluol p.a. abgerieben. Anschliessend wurden die Platten zehn Minuten in Essigsäure eingestellt. Die Platten wurden dann mit Wasser (dest.), Aceton und Toluol p.a. gespült.

Als eine Siliziumplatte wurde die Oberfläche von einseitig polierten Si(100)-Einkristallscheiben (Philips Semiconductor AG, Zürich, Schweiz) (18x40x0.38 mm) verwendet. Die Platten wurden durch Einstellen in Toluol UV von organischen Verunreinigungen gesäubert.

Als eine Glasplatte wurde die Oberfläche von Objektträgem (Menzel, Braunschweig, Deutschland) (18x40x1 mm) verwendet. Die Platten wurden über Nacht in NaOH (10 w% in Wasser (dest.)) eingestellt und anschliessend mit Wasser (dest.), Aceton und Toluol p.a. gespült.

Als eine Keramikplatte wurde die Oberfläche von Aluminiumoxidkeramik (96%, A476, Firag, Ebmatingen, Schweiz) (18x40x1 mm) verwendet. Die Platten wurden durch Einstellen in Toluol UV von organischen Verunreinigungen gesäubert.

Als Steinplatten wurden die Oberflächen von Pietra di Lecce (Ditta DECOR S.a.S. di MARTINA & Co., Arnesano, Italien), Molasse (Berner Sandstein, Steinbruch Ostermundingen, Schweiz) und Buntsandstein (Steinbruch Kirschfurt, Miltenberger Industriewerke, Bürgstadt, Deutschland) verwendet. Die Platten (ca. 5x5x1 cm) wurden durch Abspülen mit Wasser (dest.) von Verunreinigungen gesäubert.

Als Betonplatten wurden die Oberflächen von Kiesbeton mit Mainkies, Kiesbeton mit Donaukies und Splittbeton mit Kalkschotter und Mainsand (Miltenberger Industriewerke, Bürgstadt, Deutschland) verwendet. Die Platten (ca. 4x4x4 cm) wurden durch Abspülen mit Wasser (dest.) von Verunreinigungen gesäubert.

- Als Holzstücke (kleiner 3x3x0.5°cm) wurden Pappel, Ahorn und Eiche (Pastorini, Zürich, Schweiz) verwendet. Als Karton (etwa 2x2x0.1 cm) wurde Standardverpackungsmaterial verwendet. Die Substrate wurden mit Wasser (dest.) und Aceton gespült.

Celluloseplatten (etwa 2x2x0.1 cm) (Mikro Technik, Bürgstädt, Deutschland) wurden mit Toluol p.a. gespült.

Baumwolle (Textilien etwa 3x3 cm) (100%, C&A, Zürich, Schweiz) wurde mit Toluol p.a. gespült.

Viskose (Textilien etwa 3x3 cm) (100%, C&A, Zürich, Schweiz) wurde mit Wasser (dest.), Aceton und Toluol p.a. gespült.

Als Seide wurde Seiden-Twill (19001, abgekocht) und Seide Habotai Taffet (11207, abgekocht) (Bilco-Seide, Zürich, Schweiz) verwendet. Die Seiden (Textilien etwa 3x3 cm) wurden mit Toluol p.a. gespült.

### Verwendete Chemikalien und Analysegeräte Chemikalien:

Toluol UV (99,5%, UV-Qualität), Toluol (purum), Hexan UV (UV-Qualität), Chloroform UV (UV-Qualität), Tetrachlorkohlenstoff UV (UV-Qualität), Salzsäure (37%, puriss p.a.), Salpetersäure (65%, puriss p.a.), Dimethyldichlorsilan (DMDCS) (99,5%), Tributylzinnhydrid (TBZH) (98%) und Platin(IV)-chlorwasserstoffsäure Hydrat (Pt(IV)) (38% Pt) wurden bei Fluka (Buchs, Schweiz) bezogen.

Chlordimethylsilan (CDMS) (98%), Octadecylsilan (ODS) (98%) und Tributylgermaniumhydrid (TBGH) (99%) wurden bei Aldrich (Buchs, Schweiz) bezogen.

Diethylmethylsilan (DEMS), Polydimethylsiloxan Hydrid-terminiert (PDMS-28) (M.W. 28000 g/mol), Polydimethylsiloxan Trimethylsiloxy-terminiert (M.W. 28000 g/mol), Polydimethylsiloxan Hydrid-terminiert (PDMS-62) (M.W. 62000 g/mol), Polymethylhydrosiloxan (PHMS) (M.W. 2270 g/mol), (45-50%)Methylhydro-(50-55%)Phenylmethylsiloxan-Copolymer Dimethylsiloxy-terminiert (MHPMS), (1,2-Dimetylsilazan)-(1-Methylsilazan)-Copolymer (DMSMS) und Platin(0)-divinyltetramethyldisiloxan (Pt(0)) (Komplex in Xylol, 2,1-2,4% Platin, low color) wurden bei ABCR (Karlsruhe, Deutschland) bezogen.

RTV 601, RTV 604 und RTV 625 Silkonkautschuke wurden bei Wacker (Basel, Schweiz) bezogen.

Sylgard 184 wurde bei Dow Corning (Wiesbaden, Deutschland) bezogen.

Polyester (Mylar® A) wurde bei Du Pont de Nemours (Bad Homburg, Deutschland) bezogen.

Essigsäure (100%, reinst) und Toluol p.a. (puriss p.a.) wurden bei Riedel-de Haën (Seeize, Deutschland) bezogen. NaOH (Plätzchen PH. Eur. II) wurde bei Siegfried (Zofingen, Schweiz) bezogen. Aceton (technisch) wurde bei Scheller (Zürich, Schweiz) bezogen. cis-Dichlorobis(styrol)platin(II) (Pt(II)) wurde wie in der Literatur beschrieben synthetisiert (Caseri, W.R.; Dissertation, ETH Zürich, 1988). Argon (Ar) (99,99%) wurde bei Pan Gas (Luzem, Schweiz) bezogen.

### Analyseverfahren:

Infrarot-Reflexions-Absorptions-Spektren bei streifendem Einfall (80°) (IR), Röntgenphotoelektronenspektren mit MgKα-Strahlung (XPS), ellipsometrische Messungen bei λ=632.8 nm und/oder vorrückende Kontaktwinkel von Wasser (θₐ) wurden gemessen. Eine genauere Beschreibung der Messmethoden findet man in Steiner,U.B.; Caseri,W.R.; Suter,U.W.; Rehahn.M.; Schmitz,L.; Langmuir **1993**,9,3245.

### Beispiele 1-46, 60-67, 69-81 (Tabelle 1):

Der Aktivator wurde in Lösungsmittel unter der angegebenen Atmosphäre (atm.) bei Raumtemperatur während ca. 10 Minuten (in Beispiel 1 bis 2 aber 20 Minuten) gerührt. Die Substratplatte wurde dann in die erhaltene Lösung oder Suspension eingetaucht. Ein Si-H-, Sn-H- oder Ge-H-Reagenz wurde anschliessend zugegeben. Das Reaktionsgemisch wurde dann während der angegebenen Zeit unter der angegebenen Atmosphäre bei Raumtemperatur leicht gerührt. Die Substratplatte wurde danach herausgenommen, mit 30 ml Toluol gespült und an der angegebenen Atmosphäre getrocknet. Die so erhaltenen Proben wurden bis zur Charakterisierung unter der angegebenen Atmosphäre aufbewahrt.

### Beispiele unter Argonatmosphäre (Tabelle 1):

Toluol wurde vor der Zugabe des Aktivators während ca. 15 Minuten bei Raumtemperatur mit Argon entgast. Die gespülte Substratplatte wurde mit Argon trocken geblasen.

**Tabelle 1:**

| **Nr.** | **Reagenz** | **Aktivator** | **Toluol** | **Substratplatte** | **atm.** | **Zeit** |
|---|---|---|---|---|---|---|
| 1 | 1 mM CDMS | 50 µM Pt(II) | UV | Goldfilm | Ar | 1 h |
| 2 | 1 mM DEMS | 50 µM Pt(II) | UV | Goldfilm | Ar | 1 h |
| 3 | 1 mM PDMS-28 | 50 µM Pt(II) | UV | Goldfilm | Ar | 1 h |
| 4 | 1 mM PDMS-28 | 50 µM Pt(II) | UV | Kupferfilm | Ar | 1 h |
| 5 | 1 mM PDMS-28 | 50 µM Pt(II) | UV | Aluminiumfilm | Ar | 1 h |
| 6 | 1 mM PDMS-28 | 50 µM Pt(II) | UV | Chromfilm | Ar | 1 h |
| 7 | 1 mM PDMS-28 | 50 µM Pt(II) | UV | Titanfilm | Ar | 1 h |
| 8 | 1 mM PDMS-28 | 50 µM Pt(II) | UV | Eisenfilm | Ar | 1 h |
| 9 | 1 mM PDMS-28 | 50 µM Pt(II) | UV | Kupferplatte | Ar | 1 h |
| 10 | 1 mM PDMS-28 | 50 µM Pt(II) | UV | Aluminiumplatte | Ar | 1 h |
| 11 | 1 mM PDMS-28 | 50 µM Pt(II) | UV | Eisenplatte | Ar | 1 h |
| 12 | 1 mM PDMS-28 | 50 µM Pt(II) | UV | V2A-Stahlplatte | Ar | 1 h |
| 13 | 1 mM PDMS-28 | 50 µM Pt(II) | UV | Glasplatte | Ar | 1 h |
| 14 | 1 mM PDMS-28 | 50 µM Pt(II) | UV | Keramikplatte | Ar | 1 h |
| 15 | 1 mM PDMS-28 | 50 µM Pt(II) | UV | Pietra di Lecce | Ar | 1 h |
| 16 | 1 mM PDMS-28 | 50 µM Pt(II) | UV | Molasse | Ar | 1 h |
| 17 | 1 mM PDMS-28 | 50 µM Pt(II) | UV | Buntsandstein | Ar | 1 h |
| 18 | 1 mM PDMS-28 | 50 µM Pt(II) | UV | Kiesbeton mit Mainkies | Ar | 1 h |
| 19 | 1 mM PDMS-28 | 50 µM Pt(II) | UV | Kiesbeton mit Donaukies | Ar | 1 h |
| 20 | 1 mM PDMS-28 | 50 µM Pt(II) | UV | Splittbeton mit Kalkschotter und Mainsand | Ar | 1 h |
| 21 | 1 mM PHMS | 50 µM Pt(II) | UV | Goldfilm | Ar | 1 h |
| 22 | 1 mM PHMS | 50 uM Pt(II) | UV | Kupferfilm | Ar | 1 h |
| 23 | 1 mM PHMS | 50 µM Pt(II) | UV | Aluminiumfilm | Ar | 1 h |
| 24 | 1 mM PHMS | 50 µM Pt(II) | UV | Eisenfilm | Ar | 1 h |
| 25 | 1 mM PHMS | 50 µM Pt(II) | UV | Nickelfilm | Ar | 1 h |
| 26 | 1 mM PHMS | 50 µM Pt(II) | UV | Siliziumplatte | Ar | 1 h |
| 27 | 1 mM MHPMS | 50 µM Pt(II) | UV | Kupferfilm | Ar | 1 h |
| 28 | 1 mM DMSMS | 50 µM Pt(II) | UV | Kupferfilm | Ar | 1 h |
| 29 | 1 mM DMSMS | 50 µM Pt(II) | UV | Siliziumplatte | Ar | 1 h |
| 30 | 0.1 mM PDMS-62 | 50 µM Pt(II) | UV | Goldfilm | Ar | 1 h |
| 31 | 0.1 mM PDMS-62 | 50 µM Pt(II) | UV | Kupferfilm | Ar | 1 h |
| 32 | 0.1 mM PDMS-62 | 50 µM Pt(II) | UV | Aluminiumfilm | Ar | 1 h |
| 33 | 0.1 mM PDMS-62 | 50 µM Pt(II) | UV | Eisenfilm | Ar | 1 h |
| 34 | 1 mM ODS | 50 µM Pt(II) | UV | Goldfilm | Ar | 1 h |
| 35 | 1 mM TBZH | 50 µM Pt(II) | UV | Goldfilm | Ar | 1 h |
| 36 | 1 mM TBZH | 50 µM Pt(II) | UV | Kupferfilm | Ar | 1 h |
| 37 | 1 mM TBGH | 50 µM Pt(II) | UV | Goldfilm | Ar | 1 h |
| 38 | 1 mM TBGH | 50 µM Pt(II) | UV | Kupferfilm | Ar | 1 h |
| 39 | 1 mM PDMS-28 | 50 µM Pt(II) | purum | Goldfilm | Luft | 1 h |
| 40 | 1 mM PDMS-28 | 50 µM Pt(II) | purum | Kupferfilm | Luft | 1 h |
| 41 | 1 mM PDMS-28 | 50 µM Pt(II) | purum | Kupferplatte | Luft | 1 h |
| 42 | 0.1 mM PDMS-28 | 50 µM Pt(II) | purum | Kupferplatte | Luft | 1 h |
| 43 | 0.01 mM PDMS-28 | 50 µM Pt(II) | purum | Kupferplatte | Luft | 1 h |
| 44 | 0.1 mM PDMS-28 | 5 µM Pt(II) | purum | Kupferplatte | Luft | 1 h |
| 45 | 0.1 mM PDMS-28 | 50 µM Pt(II) | purum | Kupferplatte | Luft | 30 min |
| 46 | 0.1 mM PDMS-28 | 50 µM Pt(II) | purum | Kupferplatte | Luft | 10 min |
| 60 | 1 mM CDMS + 10mM DMDCS | 50 µM Pt(II) | UV | Kupferfilm | Ar | 1 h |
| 61 | 1 mM PHMS | 50 µM Pt(II) | p.a. | Kupferfilm | Luft | 1 h |
| 62 | 1 mM PHMS | 50 µM Pt(II) | p.a. | Aluminiumfilm | Luft | 1 h |
| 63 | 1 mM PHMS | 50 µM Pt(II) | p.a. | Kupferplatte | Luft | 1 h |
| 64 | 1 mM PHMS | 50 µM Pt(II) | p.a. | Aluminiumplatte | Luft | 1 h |
| 65 | 1 mM PHMS | 50 µM Pt(II) | p.a. | Glasplatte | Luft | 1 h |
| 66 | 1 mM PHMS | 50 uM Pt(II) | p.a. | Kupferplatten | Luft | 1 h |
| 67 | 1 mM PHMS | 50 uM Pt(II) | p.a. | Aluminiumplatten | Luft | 1 h |
| 69 | 0.1 mM PDMS-28 | 50 µM Pt(O) | UV | Goldfilm | Ar | 1 h |
| 70 | 0.1 mM PDMS-28 | 50 µM Pt(O) | UV | Kupferfilm | Ar | 1 h |
| 71 | 0.1 mM PDMS-28 | 50 µM Pt(O) | UV | Aluminiumfilm | Ar | 1 h |
| 72 | 0.1 mM PDMS-28 | 50 µM Pt(IV) | UV | Goldfilm | Ar | 1 h |
| 73 | 0.1 mM PDMS-28 | 50 µM Pt(II) | p.a. | Pappel | Luft | 1 h |
| 74 | 0.1 mM PDMS-28 | 50 µM Pt(II) | p.a. | Ahorn | Luft | 1 h |
| 75 | 0.1 mM PDMS-28 | 50 µM Pt(II) | p.a. | Eiche | Luft | 1 h |
| 76 | 0.1 mM PDMS-28 | 50 µM Pt(II) | p.a. | Karton | Luft | 1 h |
| 77 | 0.1 mM PDMS-28 | 50 µM Pt(II) | p.a. | Celluloseplatte | Luft | 1 h |
| 78 | 0.1 mM PDMS-28 | 50 µM Pt(II) | p.a. | Baumwolle | Luft | 1 h |
| 79 | 0.1 mM PDMS-28 | 50 µM Pt(II) | p.a. | Viskose | Luft | 1 h |
| 80 | 0.1 mM PDMS-28 | 50 µM Pt(II) | p.a. | Seiden-Twill | Luft | 1 h |
| 81 | 0.1 mM PDMS-28 | 50 µM Pt(II) | p.a. | Seide Habotai Taffet | Luft | 1 h |

### Beispiele 1-2:

Das Reaktionsgemisch wurde im Eisbad hergestellt.

### Beispiele 61-64 (Tabelle 1):

Auf die beschichteten Substratplatten wurden Schichten aus RTV 601, RTV 604 und RTV 625 aufgebracht.

### Beispiel 65 (Tabelle 1):

Auf die beschichteten Substratplatten wurden Schichten aus Sylgard 184 aufgebracht.

### Beispiele 66-67 (Tabelle 1):

Zwischen zwei beschichtete Substratplatten wurden Schichten aus RTV 601 aufgebracht.

### Beispiel 67 b:

3.8 mg cis-Dichlorobis(styrol)platin(II) wurden in 160 ml Toluol p.a. bei Raumtemperatur während ca. 10 Minuten gerührt. Die erhaltene Lösung oder Suspension wurde dann mit einem Wattebausch auf eine Aluminiumplatte aufgestrichen und dann an der Luft getrocknet. Anschliessend wurde eine Schicht aus RTV 601 aufgebracht.

### Beispiel 68:

Auf Polyesterfolie wurden ca. 10 nm dicke Aluminiumfilme aufgedarnpft. Diese wurde dann in eine Mischung aus cis-Dichlorobis(styrol)platin(II) (50 µM) und Polydimethylsiloxan Hydrid-terminiert (M.W. 28000 g/mol) (0.1 mM) in Toluol p.a. während einer Stunde eingetaucht. Danach wurde diese mit Toluol p.a. gespült und mit Argon trocken geblasen. Die so erhaltene beschichtete Oberfläche wurde anschliessend mit einem Laser strukturiert. Die strukturierte Oberfläche wurde dann auf eine Aluminiumplatte aufgeklebt und als Druckplatte für einen wasserlosen Flachdruck verwendet.

### Beispiele 47-59 (Tabelle 2):

Pt(II) wurde in Lösungsmittel bei Raumtemperatur während ca. 10 Minuten gerührt. PDMS-28 wurde anschliessend zugegeben. Das Reaktionsgemisch wurde dann, nach der angegebenen Zeit, auf die Substratplatte bei Raumtemperatur wie angegeben aufgebracht. Die Substratplatte wurde danach mit 30 ml Toluol gespült und an der Luft getrocknet. Die so erhaltenen Proben wurden bis zur Charakterisierung in braunen Snap-cap-Weithalsflaschen aufbewahrt.

**Tabelle 2:**

| **Nr.** | **PDMS-28** | **Pt(II)** | **Toluol** | **Substratplatte** | **Aufbringen** |
|---|---|---|---|---|---|
| 47 | 1 mM | 50 µM | purum | Goldfilm | aufgestrichen mit Wattebausch |
| 48 | 1 mM | 50 µM | purum | Stahlplatte | aufgestrichen mit Wattebausch |
| 49 | 1 mM | 50 µM | purum | Kupferplatte | aufgestrichen mit Wattebausch |
| 50 | 0.1 mM | 50 µM | purum | Kupferplatte | aufgetropft mit einer Pipette |
| 51 | 1 ml | 5 mg | 1 ml purum | Kupferplatte | aufgetropft mit einer Pipette |
| 52 | 1 ml | 5 mg | keines | Kupferplatte | aufgetropft mit einer Pipette |
| 53 | 1 mM | 50 µM | purum | Goldfilm | aufgesprüht mit einem Zerstäuber |
| 54 | 1 mM | 50 uM | purum | Stahlplatte | aufgesprüht mit einem Zerstäuber |
| 55 | 1 mM | 50 µM | purum | Kupferplatte | aufgesprüht mit einem Zerstäuber |
| 56 | 0.1 mM | 50 µM | p.a. | Kupferplatte | nach 1 h für 1 h eingetaucht |
| 57 | 0.1 mM | 50 µM | p.a. | Kupferplatte | nach 6 h für 1 h eingetaucht |
| 58 | 0.1 mM | 50 µM | p.a. | Kupferplatte | nach 1 Woche für 1 h eingetaucht |
| 59 | 0.1 mM | 50 µM | p.a. | Kupferplatte | nach 2 Wochen für 1 h eingetaucht |

Alle Experimente, wie sie in den Beispielen 1-81 beschrieben sind, wurden auch ohne Aktivator durchgeführt. Die Gesamtheit der Ergebnisse zeigte, dass ohne Aktivator das entsprechende Si-H-, Sn-H- oder Ge-H-Reagenz nicht oder nur unwesentlich an die Oberfläche bindet. Blindversuche mit reinem Lösungsmittel oder mit einer Lösung oder Suspension, welche nur den Aktivator enthält, zeigten ebenfalls keine Beschichtung, wie sie mit den entsprechenden Si-H-, Sn-H- oder Ge-H-Reagenzien erhalten wurde.

in Anwesenheit des Aktivators zeigten die Ergebnisse für alle Experimente, wie sie in den Beispielen 1-81 beschrieben sind, die Bildung einer Beschichtung, die Si, Sn oder Ge enthält.

Die beschichteten Substrate, die gemäss den Beispielen 1-81 erhalten wurden, stellte man einen halben Tag in ein Lösungsmittel des entsprechenden Si-H-, Sn-H- oder Ge-H- Reagenzes ein und spülte anschliessend gut. Als Lösungsmittel wurden entweder Toluol UV, Toluol p.a., Hexan UV, Chloroform UV oder Tetrachlorkohlenstoff UV verwendet. Die Gesamtheit der Ergebnisse zeigte, dass die Beschichtung die Si, Sn oder Ge enthält, nach dem Spülen vorhanden ist.

Versuche in Anwesenheit von cis-Dichlorobis(styrol)platin(ll) mit einer Si-Verbindung ohne Si-H-Gruppe wurden mit Dimethyldichlorsilan und mit Polydimethylsiloxan Trimethylsiloxy-terminiert auf Goldfilmen durchgeführt. Die Gesamtheit der Ergebnisse zeigte, dass die Si-Verbindung ohne Si-H-Gruppe nicht oder nur unwesentlich auf der Oberfläche bindet.

### Bewertung der Beispiele:

Beispiel 1 führte zu einer ca. 6 nm dicken Schicht mit einem vorrückenden Kontaktwinkel von Wasser von etwa 108°. Die IR-Spektren und die XPS Messungen entsprachen denen für Oligomere und/oder Polymere mit OSi(CH₃)₂-Einheiten. Ein Versuch mit destilliertem Chlordimethylsilan brachte vergleichbare Ergebnisse wie der Versuch mit dem entsprechenden undestillierten Reagenz.

Beispiel 2 führte zu einer ca. 3 nm dicken Schicht mit einem vorrückenden Kontaktwinkel von Wasser von etwa 90°. Die IR-Spektren und die XPS Messungen entsprachen denen für Oligomere und/oder Polymere mit OSi(CH₂CH₃)₂- und/oder OSi(CH₂CH₃)(CH₃)-Einheiten. Ein Versuch mit destilliertem Diethylmethylsilan brachte vergleichbare Ergebnisse wie der Versuch mit dem entsprechenden undestillierten Reagenz.

Tabelle 3 gibt die typischen Schichtdicken und vorrückenden Kontaktwinkel von Wasser der folgenden Beispiele wieder.

| Beispiel Nr. | Schichtdicke [nm] | Kontaktwinkel zu Wasser [°] | |
|---|---|---|---|
| 3-8 | 2-5 | 108-115 | |
| 9-14 | - | 105-115 | |
| 15-20 | - | 105 - 130 | |
| 21-26 | 5-8 | 80 - 100 | |
| 27 | ~3 | ~100 | |
| 28-29 | 2-5 | 85 - 95 | |
| 30-33 | 2-5 | 105-115 | |
| 34 | ~2 | ~106 | |
| 35-36 | ~4 | ~90 | |
| 37-38 | 1-2 | 70 - 85 | |
| 41-46 | - | 105-110 | |
| 47-55 | - | 100-110 | |
| 56-59 | - | 100-105 | |
| 60 | 100 | ~138 | |
| 68 | - | ~105 | |
| 69-71 | - | 110-115 | |
| 72 | 4 | ~112 | |
| 73-76 | - | 113-133 | |
| 77 | - | ~110 | |
| 78-79 | - | 125 - 135 | |
| 80-81 | - | 110 - 125 | |

Bei den Beispielen 3-8, 30-33, 39-40, 47-48, 53-54, 60 und 72 entsprachen die IR-Spektren und die XPS Messungen denen für Polydimethylsiloxan. Bei den Beispielen 21-26 die IR-Spektren und die XPS Messungen denen für Polymethylhydrosiloxan. Die IR-Spektren zeigten, dass unter den gewählten Bedingungen nicht alle Si-H-Gruppen reagiert haben. Von Beispiel 26 konnte kein IR-Spektrum gemessen werden, da Siliziumoberflächen im IR-Spektrometer in Reflexion nicht routinemässig gemessen werden können. Für den Versuch ohne Aktivator beobachtete man für Goldfilme eine Filmbildung mit Polymethylhydrosiloxan. Dieser Film wurde durch Einstellen in Chloroform UV während eines halben Tages vollständig entfernt. Bei Beispiel 27 entsprachen die IR-Spektren und die XPS Messungen denen für ein Methylhydro-Phenylmethylsiloxan-Copolymer ohne die Si-H Streckschwingung.

Bei den Beispielen 28-29 entsprachen die IR-Spektren und die XPS Messungen denen für ein (1,2-Dimetylsilazan)-(1-Methylsilazan)-Copolymer. Die IR-Spektren von Beispiel 28 zeigten, dass unter den gewählten Bedingungen nicht alle Si-H Gruppen reagiert haben. Von Beispiel 29 konnte wie für Beispiel 26 kein IR-Spektrum gemessen werden. Bei Beispiel 34 entsprachen die IR-Spektren und die XPS Messungen denen für eine Monoschicht mit einer gesättigten Kohlenwasserstoffkette mit einer Kettenlänge von 18 Kohlenstoffatomen und Si-O-Gruppen. Versuche mit gereinigtem und ungereinigtem Octadecylsilan brachten vergleichbare Ergebnisse. Bei den Beispielen 35-36 entsprachen die IR-Spektren im Bereich von 3000-2800 cm⁻¹ denen für Tributylzinnhydrid. Die Sn-H Streckschwingung bei 1810 cm⁻¹ sah man nicht mehr. Bei den Beispielen 37-38 entsprachen die IR-Spektren im Bereich von 3000-2800 cm⁻¹ denen für Tributylgermaniumhydrid. Die Ge-H Streckschwingung bei 2006 cm⁻¹ sah man nicht mehr.

Das bei den Beispielen 56-59 verwendete Reaktionsgemisch war braun gefärbt, was auf die Anwesenheit von kolloidalem Platin hinweist.

Beispiele 61-65 und 67b führten zu fest haftenden Schichten von Silikonkautschuken auf den Substratplatten. Beispiel 61 zeigt beim Ziehen, dass der Kupferfilm von dem Siliziumwafer abgelöst wird, während RTV auf dem Kupferfilm haften bleibt. Ohne die erfindungsgemässe Beschichtung wurde keine vergleichbare Haftung festgestellt.

Beispiele 66-67 führten zum Verkleben der beiden Platten. Bei Zugscherversuchen nach DIN 53 283 wurden Klebefestigkeiten von bis zu 8 N/mm² gemessen. Dabei wurde ein kohäsiver Bruch beobachtet. Der Einsatz von Silikonkautschuken oder anderen Substanzen mit besseren mechanischen Eigenschaften wird also zu höheren Klebefestigkeiten führen. Substratplatten ohne die erfindungsgemässe Beschichtung konnten nicht verklebt werden.

Die bei Beispiel 68 erhaltene Schicht wurde dann mit einem Laser strukturiert. Die strukturierte Oberfläche wurde dann als Druckplatte für einen wasserlosen Flachdruck verwendet und führte zu Druckerzeugnissen mit guter Auflösung. Ohne die erfindungsgemässe Beschichtung konnte keine strukturierte Oberfläche und damit keine Druckerzeugnisse erhalten werden.

Bei den Beispiele 69-71 entsprachen die IR-Spektren denen für Polydimethylsiloxan.

Alle erhaltenen Ergebnisse zeigten, dass sowohl die Anwesenheit eines Si-H-, Sn-H- oder Ge-H-Reagenzes als auch die Anwesenheit eines Aktivators für die Beschichtung notwendig ist. Es hat sich weiter gezeigt, dass die genaue Zusammensetzung der Beschichtung durch die Anwesenheit von zusätzlichen Substanzen beeinflusst werden kann.

Die Beispiele wurden in Toluol und bei Raumtemperatur durchgeführt. Dadurch sollten vergleichbare Bedingungen gewährleistet werden. Das erfindungsgemässe Verfahren lässt sich aber auch in anderen Lösungsmitteln, ohne Lösungsmittel in Substanz und/oder bei anderen Temperaturen durchführen.

Ein Teil der Beispiele wurde mit Lösungsmitteln in UV-Qualität durchgeführt, um bei der Charakterisierung der Beschichtungen Probleme durch Verunreinigungen aus dem Lösungsmittel zu vermeiden. Das erfindungsgernässe Verfahren lässt sich aber auch in technischen Lösungsmitteln geringer Reinheit durchführen.

Ein Teil der Beispiele wurde auf Oberflächen durchgeführt, welche auf Scheiben mittels thermischer Bedampfung erzeugt wurden, um eine einwandfreie Charakterisierung der Beschichtung zu gewährleisten. Jedoch kann das erfindungsgemässe Verfahren auch auf anderen Oberflächen durchgeführt werden. Die gewählten Konzentrationen und Zeiten sollten vergleichbare Bedingungen gewährleisten. Das erfindungsgemässe Verfahren lässt sich aber auch mit anderen Konzentrationen und/oder anderen Zeiten durchführen. Ein Teil der Beispiele zeigt, dass die Beschichtungen durch Eintauchen hergestellt wurden. Die Beschichtungen können aber auch auf andere Art und Weise erhalten werden, wie z.B. durch Aufpinseln oder Aufsprühen.

## Patentansprüche

1. Verfahren zum Beschichten einer Metalloberfläche, Metalloxidoberfläche, Metallsalzoberfläche, siliziumhaltigen Oberfläche und hochmolekularen aquoxidhaltigen organischen Oberfläche, wobei man ein Reagenz, das eine reaktive Gruppe, ausgewählt aus Si-H, Sn-H und Ge-H, aufweist, in Gegenwart eines Platinmetalles in Form einer Verbindung oder in metallischer Form als Aktivator, in flüssiger, pastoser oder fester Form, auf die zu beschichtende Oberfläche aufbringt, wobei eine Mischung aus 16 bis 23 Gew.-% ungehärtetem Silikonharz, 46 bis 73 Gew.-% SiO₂, 4 bis 15 Gew.-% Silan und 6 bis 25 Gew.-% Xylol, die einen Platinkatalysator enthält, ausgeschlossen ist.

2. Verfahren nach Anspruch 1, **dadurch gekennzeichnet, dass** man eine siliziumoxidhaltige Oberfläche, die Oberfläche eines Silizumwafers, die Oberfläche eines anorganischen Glases, eine Keramikoberfläche, eine Gesteinoberfläche, die Oberfläche eines künstlichen Steins, die Oberfläche eines Polysaccharids, die Oberfläche einer Cellulose oder eines Cellulosederivats, eine Holzoberfläche, die Oberfläche eines Proteins und/oder eine Oberfläche, die eine natürliche Oxidschicht aufweist, beschichtet.

3. Verfahren nach Anspruch 1, **dadurch gekennzeichnet, dass** man als Aktivator eine Verbindung von Platin, Platin in metallischer Form als Teilchen atomarer, kolloidaler oder grösserer Dimension, eine Platinverbindung, welche mit Silanen zu Platin(O) reduziert wird oder welche bereits Platin(O) enthält, cis-Dichlorobis(styrol)pliatin(II) und/oder Platin(O)divinyltetramethyldisiloxan verwendet.

4. Verfahren nach Anspruch 1, **dadurch gekennzeichnet, dass** man als Reagenz eine niedermolekulare Verbindung und/oder eine hochmolekulare Verbindung verwendet.

5. Verfahren nach Anspruche 1 oder 4, **dadurch gekennzeichnet, dass** man als Reagenz, welches als reaktive Gruppe eine Si-H-Gruppe aufweist, ein Silan, Polysilazan, ein Polyhydrosiloxan und/oder ein Polysiloxan verwendet.

6. Verfahren nach Anspruche 1, 4 oder 5, **dadurch gekennzeichnet, dass** man als Reagenz ein Copolymer verwendet.

7. Verfahren nach einem der vorangehenden Ansprüche, **dadurch gekennzeichnet, dass** man ein Reagenz mit weiteren reaktiven Gruppen verwendet, wobei die weitere(n) reaktive(n) Gruppe(n) für eine Reaktion nach dem Beschichten der Oberfläche bestimmt sind.

8. Verfahren nach einem der vorangehenden Ansprüche, **dadurch gekennzeichnet, dass** man die Beschichtung auf der Oberfläche zersetzt.

9. Verfahren nach einem der vorangehenden Ansprüche, **dadurch gekennzeichnet, dass** man eine Haft-, Klebe-, Haftvermittlungs-, Schmier-, Gleit-, Schutz-, Biokompatibilitäts-, Antihaft- und/oder Antigraffitischicht und/oder eine Beschichtung für Druckplatten oder - folien herstellt.

10. Formkörper mit einer Metalloberfläche, Metalloxidoberfläche, Metallsalzoberfläche, siliziumhaltigen Oberfläche und/oder hochmolekularen aquoxidhaltigen organischen Oberfläche, der nach dem Verfahren gemäss einem der vorangehenden Ansprüche beschichtet worden ist.

## Claims

1. A process for coating a metal surface, metal-oxide surface, metal-salt surface, silicon-comprising surface and high-molecular-weight aquoxide-comprising organic surface, wherein a reagent comprising a reactive group being selected from Si-H, Sn-H and Ge-H, is applied in the presence of a platinum metal, as compound or in metallic form, that acts as activator, and the said reagent is used in the liquid, pasty or solid form, on the surface to be coated, except a mixture from 16 to 23 weight percent of an uncured silicon resin, 46 to 73 weight percent of silicon dioxide, 4 to 15 weight percent of silicon hydride and 6 to 25 weight percent of xylene, said mixture comprising a platinum catalyst.

2. The process according to claim 1, **characterized by** coating of a silicon oxide-comprising surface, the surface of a silicon wafer, the surface of an inorganic glass, a ceramic surface, a rock surface, the surface of an artificial stone, the surface of a polysaccharide, the surface of a cellulose or a cellulose derivative, a wood surface, the surface of a protein and / or a surface comprising a natural oxide layer.

3. The process according to claim 1, **characterized by** the use of a platinum compound, platinum in metallic form as a particle of atomic, colloidal or larger dimension, a platinum compound that is reduced with silanes to platinum(O) or that already contains platinum(O), cis-dichlorobis(styrene)platinum(II) and/or platinum(O)divinyltetramethyidisiloxane as activator.

4. The process according to claim 1, **characterized by** the use of a low-molecular-weight compound and/or a high-molecular-weight compound as reagent.

5. The process according to claims 1 or 4, **characterized by** the use of a silane, a polysilazane, a polyhydrosiloxane and/or a polysiloxane as reagent that comprises a Si-H group as reactive group.

6. The process according to claims 1, 4 or 5, **characterized by** the use of a copolymer as reagent.

7. The process according to any of the preceding claims, **characterized by** the use of a reagent with additional reactive groups, wherein the additional reactive group(s) is (are) intended for a reaction after the coating of the surface.

8. The process according to any of the preceding claims, **characterized by** the decomposition of the coating on the surface.

9. The process according to any of the preceding claims, **characterized by** the preparation of an adhesive, gluing, adhesion-promotion, lubrication, grease, protective, biocompatibility, anti-adhesive and/or anti-graffiti layer and / or a coating for printing plates or foils.

10. Shaped body having a metal surface, metal-oxide surface, metal-salt surface, silicon-comprising surface and/or high-molecular-weight aquoxide-comprising organic surface that has been coated in accordance with the process according to any of the preceding claims.

## Revendications

1. Procédé d'enduction d'une surface de métal, d'une surface d'oxyde de métal, d'une surface de sel inorganique, d'une surface siliceuse et d'une surface organique d'aquoxyde de masse moléculaire élevée, moyennant quoi on met un réactif, qui présente un groupe réactif sélectionné à partir de Si-H, Sn-H et Ge-H, en présence d'un métal du groupe du platine sous forme d'une combinaison ou sous forme métallique en tant qu'activateur, sous forme liquide, pâteuse ou solide, sur la surface à enduire, un mélange constitué de 16 à 23 % en poids d'une résine de silicones non durcie, de 46 à 73 % en poids de SiO₂, de 4 à 15 % en poids de silane et de 6 à 25 % en poids de xylène, qui contient un catalyseur de platine, étant exclu.

2. Procédé selon la revendication 1, **caractérisé en ce qu'**on enduit une surface à l'oxyde de silicium, la surface d'une tranche de silicium, la surface d'un verre minéral, une surface céramique, une surface rocheuse, la surface d'une pierre artificielle, la surface d'un polysaccharide, la surface d'une cellulose ou d'un dérivé de cellulose, une surface de bois, la surface d'une protéine et/ou une surface qui présente une couche d'oxyde naturelle.

3. Procédé selon la revendication 1, **caractérisé en ce qu'**on utilise comme activateur une combinaison de platine, de platine sous forme métallique en tant que particules de dimension atomique, colloïdale ou supérieure, une combinaison de platine, réduite à du platine(O) avec des silanes ou qui contient déjà du platine(O), du cis-dichlorobis(styrène)platine(II) et/ou du platine(O)divinyltétraméthyldisiloxane.

4. Procédé selon la revendication 1, **caractérisé en ce qu'**on utilise comme réactif une combinaison de faible masse moléculaire et/ou une combinaison de masse moléculaire élevée.

5. Procédé selon les revendications 1 ou 4, **caractérisé en ce qu'**on utilise comme réactif, lequel présente un groupe Si-H en tant que groupe réactif, un silane, un polysilazane, un polyhydrosiloxane et/ou un polysiloxane.

6. Procédé selon les revendications 1, 4 ou 5, **caractérisé en ce qu'**on utilise un copolymère comme réactif.

7. Procédé selon l'une quelconque des revendications précédentes, **caractérisé en ce qu'**on utilise un réactif avec d'autres groupes réactifs, l'autre (les autres) groupe(s) réactif(s) étant défini(s) pour obtenir une réaction après l'enduction de la surface.

8. Procédé selon l'une quelconque des revendications précédentes, **caractérisé en ce qu'**on décompose l'enduction sur la surface.

9. Procédé selon l'une quelconque des revendications précédentes, **caractérisé en ce qu'**on fabrique une couche adhésive, collante, d'accélération de l'adhérence, de graissage, de glissement, de protection, de biocompatibilité, d'antiadhérence et/ou d'antigraffiti et/ou une enduction pour des planches ou films d'impression.

10. Substance moulée avec une surface de métal, une surface d'oxyde de métal, une surface de sel inorganique, une surface siliceuse et/ou une surface organique d'aquoxyde de masse moléculaire élevée, qui a été enduite conformément au procédé selon l'une des revendications précédentes.
